Europäisches Patentamt

European Patent Office

Office européen des brevets

(11) Veröffentlichungsnummer : **0 081 082
B1**

(12) **EUROPÄISCHE PATENTSCHRIFT**

(45) Veröffentlichungstag der Patentschrift :
05.03.86

(21) Anmeldenummer : 82110088.0

(22) Anmeldetag : 02.11.82

(51) Int. Cl.⁴ : **C 03 B 37/06**

(54) Verfahren und Vorrichtung zur Herstellung von Wollefasern.

(30) Priorität : **12.11.81 DE 3145011**

(43) Veröffentlichungstag der Anmeldung :
**15.06.83 Patentblatt 83/24**

(45) Bekanntmachung des Hinweises auf die Patenterteilung : **05.03.86 Patentblatt 86/10**

(84) Benannte Vertragsstaaten :
**AT BE CH DE FR GB IT LI LU NL SE**

(56) Entgegenhaltungen :
**DE-A- 3 016 114
DE-B- 1 053 146
DE-B- 1 067 572
DE-C-   807 131
DE-C-   883 800
US-A- 2 774 630
US-A- 3 547 610
US-A- 3 773 483**

(73) Patentinhaber : **BAYER AG
Konzernverwaltung RP Patentabteilung
D-5090 Leverkusen 1 Bayerwerk (DE)**

(72) Erfinder : **Muschelknautz, Edgar, Prof. Dr.
Carl-Rumpff-Strasse 33
D-5090 Leverkusen 1 (DE)**
Erfinder : **Rink, Norbert, Dr.
Frixheimer Strasse 60
D-4049 Rommerskirchen (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die vorliegende Erfindung betrifft ein Verfahren zur Herstellung von Fasern nach dem Düsenblasverfahren, bei dem die Primärfäden in einer Ziehdüse durch im wesentlichen zu den Primärfäden parallele Ausziehgasströme zerfasert und ausgezogen werden und bei dem die Ausziehgasströme innerhalb der Ziehdüse zumindest über einen Teil ihrer Länge in Strömungsrichtung von parallelen Begrenzungsgasströmen umgeben werden. Außerdem betrifft die Erfindung eine Ziehdüse zur Herstellung von Fasern nach dem Düsenblasverfahren, bestehend aus einem Eintrittsteil und einem daran anschließenden Ausziehkanal, wobei zusätzlich Mittel zur Erzeugung von den Ausziehkanal begrenzenden parallelen Gasströmen vorgesehen sind.

Das Düsenblasverfahren beruht darauf, daß die in einem Tiegel befindliche Schmelze unter Wirkung der Schwerkraft und zusätzlicher Druckkräfte strangförmig ausfließt und der Schmelzestrang in einer Ziehdüse unter der Wirkung von mit hoher Geschwindigkeit im wesentlichen parallel zum Schmelzestrom strömenden Gasen zerfasert, ausgezogen und unter die Erstarrungstemperatur abgekühlt bzw. durch Verdampfen des Lösungsmittels verfestigt wird. Ein solches Verfahren wurde in seinen Grundzügen bereits 1922 (DE-PS 429 554) zur Herstellung von Mineralwolle beschrieben. Die Anwendung von Begrenzungsgasströmen, die eine Art Schutzmantel um den eigentlichen Ausziehgasstrom herum bilden sollen, ist Gegenstand der DE-AS 1 067 572.

Das Düsenblasverfahren hat gegenüber denjenigen Verfahren, insbesondere zur Herstellung von Mineralwolle, bei denen die Zerfaserung mittels Zentrifugalkräften erfolgt, den Vorteil, daß keinerlei mechanisch bewegte Teile, die mit den Mineralschmelzeströmen in Berührung geraten, eingesetzt werden müssen. Beim Düsenblasverfahren erfolgt die Zerfaserung rein aerodynamisch mittels Luft, Dampf oder anderen Gasen.

Es hat sich nun gezeigt, daß insbesondere bei der Herstellung von Mineralwolle die Lebensdauer der Ziehdüsen relativ begrenzt ist. An den Innenwänden der Ziehdüse werden häufig stark erodierte bzw. ausgefressene Bereiche gefunden, durch die die Ausziehgasströmung gestört wird. Es wird vermutet, daß der Abtrag an den Innenwänden der Ziehdüse durch gegen diese schlagende bereits erstarrte Mineralschmelzefäden und/oder nicht erstarrte Perlen bewirkt wird und daß dabei auch die Fäden geschädigt werden.

Bei der Ziehdüse gemäß DE-AS 1 067 572 erfolgt die Begrenzung der Ausziehgasströmung durch die koaxialen Treibstrahlen, die zur Erzeugung des Druckgefälles erforderlich sind. Die Treibstrahlen weisen daher eine wesentlich höhere Geschwindigkeit auf als die Ausziehgasströme. In solchen Düsen werden Schmelzefäden, die in den Bereich der Treibstrahlen geraten, von diesen mitgerissen und in die Treibstrahlen hineingezogen, so daß eine Art Peitschenknall-Effekt entsteht, aufgrund dessen die Schmelzefäden gegen die Innenwand der Düse geschleudert werden.

Aufgabe der Erfindung ist es daher, ein Düsenblasverfahren zu entwickeln, bei dem die erzeugten Fasern über die gesamte Länge der Ziehdüse von der Innenwand ferngehalten werden, wodurch eine verbesserte Faserqualität und eine höhere Standzeit der Ziehdüse erreicht werden kann. Ferner liegt der Erfindung die Aufgabe zugrunde, eine Ziehdüse zu schaffen, die die Durchführung eines verbesserten Düsenblasverfahrens unter den obengenannten Aspekten ermöglicht.

Diese Aufgabe wird, ausgehend von dem eingangs beschriebenen Verfahren erfindungsgemäß dadurch gelöst, daß die Geschwindigkeit der parallelen Begrenzungsgasströme 50 bis 99 %, vorzugsweise 60 bis 80 %, der Geschwindigkeit der Ausziehgasströme beträgt und der Volumenstrom der parallelen Begrenzungsgasströme im Bereich von 10 bis 80 %, vorzugsweise zwischen 20 bis 60 %, des Volumenstroms der Einlaufgasströmung an der Düseneintriffsöffnung eingestellt wird.

Wesentlich für die vorliegende Erfindung ist, daß die Strömungsgeschwindigkeit der parallelen Begrenzungsgasströme unter der Geschwindigkeit des Ausziehgasstromes liegt. Anderenfalls läßt sich die gewünschte Abschirmung der Innenwand der Ziehdüse nicht realisieren.

Das erfindungsgemäße Verfahren ist besonders vorteilhaft für die Herstellung von Mineralwollefasern, insbesondere Steinwollefasern, anwendbar, da hier die Nachteile der bekannten Verfahren zu einer schnellen Zerstörung der Ziehdüse führten. Die Lebensdauer der Ziehdüse wird bei der Herstellung von Mineralwolle wesentlich verlängert. Die darüber hinaus erhaltenen Vorteile, daß bezüglich Durchmesser und Länge gleichmäßigere Fasern erhalten werden und der Anteil unzerfaserten Materials (Perlen) vermindert wird, weil ein Wandkontakt der auszuziehenden Fäden weitestgehend vermieden wird, werden auch für die Faserherstellung aus anderen Materialien erhalten, wie z. B. bei der Herstellung aus Lösungen, Dispersionen, Gelen, Polymerschmelzen usw. Obwohl demnach die vorliegende Erfindung auf die Zerfaserung von flüssigen Systemen allgemein gerichtet ist, befaßt sich die nachfolgende Beschreibung beispielhaft vor allem mit der Zerfaserung von Mineralschmelzen, ohne daß hiermit eine Beschränkung auf Mineralschmelzen beabsichtigt ist.

Die Erfindung wird im folgenden ohne Beschränkung ihrer Allgemeinheit anhand der anliegenden Figuren erläutert:

Figur 1 zeigt eine einfache Ausführungsform einer Vorrichtung zur Durchführung des erfindungsgemäßen Verfahrens im Querschnitt;

Figur 2 zeigt eine teilweise aufgeschnittene Längsansicht einer Vorrichtung gemäß Fig. 1;

Figur 3 zeigt eine Vorrichtung entsprechend Fig. 1, wobei jedoch die parallelen Begrenzungsgasströme rezirkuliert werden;

Figur 4 zeigt die erfindungsgemäße Abwandlung einer für die Herstellung von Mineralfasern in der DE-OS 30 16 114 beschriebenen Ziehdüse;

Figur 5 zeigt eine alternative Ausführungsform mit rezirkulierten parallelen Begrenzungsgasströmen;

Figur 6 zeigt eine im Detail A abgewandelte Ausführungsform gemäß Fig. 5;

Figur 7 zeigt eine gegenüber den Fig. 4 und 5 bevorzugte Ausführungsform der Erfindung;

Figur 8 zeigt eine Abwandlung des Details B aus Fig. 7;

Figur 9 zeigt eine erfindungsgemäß besonders bevorzugte Ausführungsform;

Figur 10 zeigt eine Aufsicht auf die Ziehdüse nach Fig. 9.

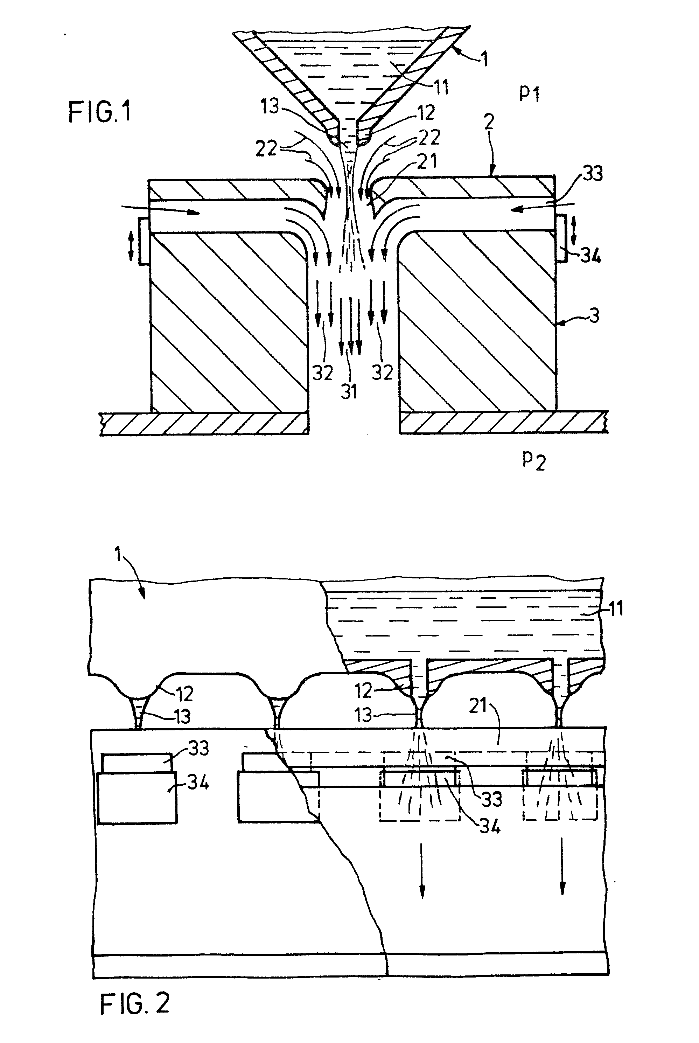

Fig. 1 und 2 zeigen einen langgestreckten Verteilertiegel 1, der die Mineralschmelze bzw. die zu zerfasernde Flüssigkeit 11 enthält. An der Unterseite des Verteilertiegels 1 befinden sich eine Vielzahl in Reihe angeordnete Nippel 12 mit Bohrungen, durch die die Primärfäden 13 ausfließen. Die Primärfäden 13 treten in die unterhalb des Verteilertiegels angeordnete Ziehdüse ein. Die Ziehdüse besteht aus einem Düseneintrittsteil 2 und einem Teil 3, in dem das Ausziehen der Fäden erfolgt. Der Düseneintrittsteil 2 enthält eine schlitzförmige Düseneintrittsöffnung 21, in die die Primärfäden 13 eintreten. Aufgrund eines Druckgefälles $\Delta P = (P1 - P2)$ über der Ziehdüse bildet sich eine Einlaufströmung 22 mit einem senkrecht zur Oberfläche des Primärfadens 13 ausgerichteten Druckgradienten aus, der eine Aufspaltung des Primärfadens 13 bewirkt. Die Einlaufströmung 22 setzt sich als Ausziehgasströmung 31 innerhalb der Ziehdüse fort und bewirkt das Ausziehen der im Einlauf 21 der Ziehdüse aufgespaltenen Primärfäden.

Erfindungsgemäß wird nun die Ausziehgasströmung 31 beidseitig durch parallele Begrenzungsströme 32 begrenzt, deren Geschwindigkeit maximal gleich der Geschwindigkeit der Ausziehgasströme 31 sein soll.

Zur Ausbildung der parallelen Begrenzungsgasströme 32 sind zwischen Einlaufteil 2 und Ausziehteil 3 der Ziehdüse Kanäle 33 vorgesehen, in die aufgrund des herrschenden Druckgefälles Gas eingesaugt wird. Die Menge des die Ausziehgasströme bildenden Gase und damit auch die Geschwindigkeit der parallelen Begrenzungsgasströme 32 kann über Schieber 34 reguliert werden.

Vorzugsweise soll die Geschwindigkeit der parallelen Begrenzungsgasströme an der Stelle, an der sie mit der Ausziehgasströmung in Berührung geraten, 50 bis 99 %, besonders bevorzugt 60 bis 80 %, der mittleren Geschwindigkeit der Ausziehgasströme betragen.

Das Druckgefälle (P1 - P2) wird bei der hier gezeigten Ausführungsform dadurch aufrechterhalten, daß der den Tiegel 1 enthaltende Raum von dem die hier nicht gezeichnete Faserablage enthaltenden Raum unterhalb der Ziehdüse abgetrennt ist und die Ziehdüse selbst den einzigen Gasdurchlaß darstellt.

Die Druckdifferenz (P1 - P2) zum Antrieb der Ausziehgasströme 31 und der parallelen Begrenzungsströme 32 kann, wie in Fig. 1 gezeigt, durch eine statische Druckdifferenz erzeugt werden. Dabei kann der Tiegel 1, der Düseneintritt 21 und die Öffnung des Kanals 33 in einen Überdruckraum eingeschlossen sein, und der Druck P2 am Ausgang der Düsen etwa Atmosphärendruck sein. Solche in Druckkammern eingeschlossene Verteilertiegel sind z. B. aus den Deutschen Patentschriften 803 925, 883 800 und 946 739 bekannt.

Dabei kann als Blasmedium z. B. Druckluft oder Wasserdampf eingesetzt werden. Es kann auch zweckmäßig sein, Blasmedien hoher Temperatur oder reduzierende Verbrennungsgase als Blasmedium einzusetzen. Dann kann gemäß Deutscher Patentschrift 807 131 die Erzeugung des reduzierenden Verbrennungsgases direkt durch Zufuhr von Brennstoff und Luft in die Druckkammer erfolgen. Zum Beispiel kann es zweckmäßig sein, solche reduzierenden Verbrennungsgase einzusetzen, wenn das zu zerfasernde Material, z. B. Metallschmelzen, anfällig gegen den Oxidationsangriff des Sauerstoffs der Luft ist. Andererseits kann es auch zweckmäßig sein, insbesondere dann, wenn als Blasmedium ein Schutzgas eingesetzt wird, die Umgebung des Tiegels 1, d. h. P1 auf Normaldruck zu halten und unterhalb des Düsenaustritts einen Unterdruck P2 zu erzeugen. Es ist dann notwendig, den Raum unterhalb der Düse abzuschließen und die Förderung der erhaltenen Fasern aus dem Unterdruckraum durch Schleusen vorzunehmen. Eine solche Verfahrensweise ist z. B. in der Deutschen Patentschrift 2 205 507 vorgeschlagen worden.

Die parallelen Begrenzungsgasströme 32 sollen einen wesentlichen Volumenanteil innerhalb des Ausziehteils 3 der Ziehdüse einnehmen. Bei einer schlitzförmigen, langgestreckten Düse ist es zweckmäßig, daß jeder der parallelen Begrenzungsgasströme ca. 10 bis 30 % des Düsenquerschnitts einnimmt. Die Dimensionierung kann zweckmäßig durch konstruktive Ausbildung der Strömungsquerschnitte an der Stelle der ersten Berührung von Ausziehgasströmen und parallelen Begrenzungsgasströmen erfolgen. Eine solche geometrische Abgrenzung der Gasströme ist insbesondere über die Länge der Ziehdüse nur schwierig zu bewerkstelligen und nachvollziehbar. Daher wird zweckmäßig als Verfahrensparameter das Volumenstromverhältnis der Einlaufgasströmung 22, die im weiteren Verlauf der Düse die Ausziehgasströmung 31 bildet, zur parallelen Begrenzungsgasströmung 32 angegeben. Der Volumenstrom der parallelen Begrenzungsgasströme beträgt vorzugsweise 10 bis 80 %, besonders bevorzugt etwa 20 bis 60 % des Volumenstroms der Einlaufströmung.

Das die parallelen Begrenzungsgasströme 32 bildende Gasvolumen muß zusätzlich durch die Druckdifferenz (P1 – P2) gefördert werden, ohne daß dieses zusätzlich zu fördernde Gasvolumen unmittelbar an der Auszieharbeit an dem zu zerfasernden Material beteiligt ist. Bevorzugt gegenüber einer Verfahrensweise gemäß Fig. 1 und Fig. 2 ist es daher, die parallelen Begrenzungsgasströme zu rezirkulieren und damit die Strömungsenergie der parallelen Begrenzungsgasströme zu erhalten.

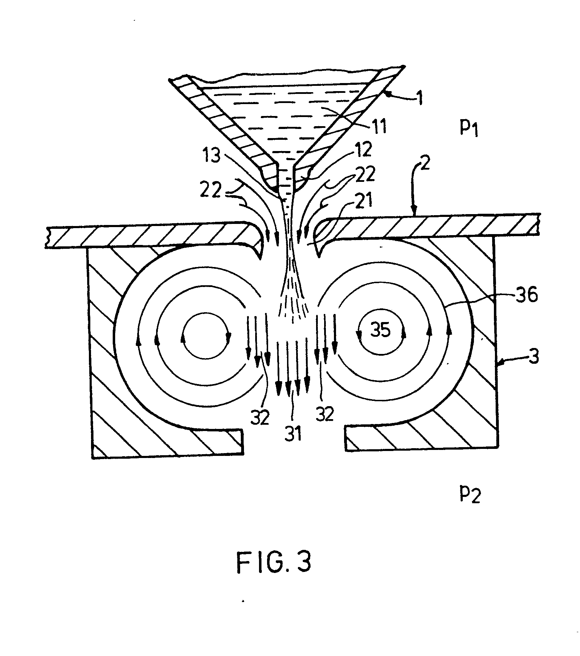

Eine solche Anordnung ist in Fig. 3 dargestellt. Fig. 3 zeigt einen Querschnitt durch eine schlitzförmige langgestreckte Ziehdüse mit Verteilertiegel 1 analog zu Fig. 1 und 2. Im Ausziehteil 3 sind beidseitig der Ausziehgasströmung 31 Kammern 35 ausgebildet, in denen sich unter der Wirkung der Ausziehgasströmung 31 stationäre Walzenströmungen 36 ausbilden. Die parallelen Begrenzungsgasströme 32 werden durch den mit der Ausziehgasströmung 31 in Berührung stehenden Teil der Walzenströmung 36 gebildet.

Das erfindungsgemäße Prinzip der Vermeidung des Randkontaktes der Ausziehgasströmung durch Einführung der parallelen Begrenzungsgasströme ist mit allen bekannten Düsenblasverfahren kombinierbar. Insbesondere kann auch die Geschwindigkeit der Ausziehgasströmung beliebig gewählt werden, solange ein ausreichender Auszieheffekt erreicht wird. Die Geschwindigkeit der Ausziehgasströmung kann im Unterschallgeschwindigkeitsbereich, vorzugsweise im schallgeschwindigkeitsnahen Bereich, liegen, oder im Überschallgeschwindigkeitsbereich. Bedingung ist lediglich, daß das Verhältnis der Geschwindigkeiten von Ausziehgasströmung und parallelen Begrenzungsströmungen erfindungsgemäß gewählt wird.

Wenn bei einem Zerfaserungsprozeß der Einsatz von Schutzgas und/oder heißer Verbrennungsgase nicht notwendig ist, wird man die Anwendung eines statischen Druckgefälles (P1–P2) wegen der damit verbundenen konstruktiven Schwierigkeiten vermeiden. Es ist dann zweckmäßig, ein dynamisches Druckgefälle mittels Treibstrahlen zu erzeugen.

Ein besonders bevorzugtes Düsenblasverfahren zur Herstellung von insbesondere Mineralwollefasern wird in der DE-OS-3 016 114 vorgestellt. Hiernach soll der Faserherstellungsprozeß in drei klar definierten und getrennten Stufen ablaufen, nämlich :

a) Aufspalten des Primär-Schmelzestromes in eine Vielzahl von Sekundär-Einzelfäden in der Einlaufströmung einer Lavaldüse,

b) Ausziehen der Sekundärfäden bis zum gewünschten Faserdurchmesser und Erstarren in einer möglichst ungestörten, praktisch turbulenzfreien, vorzugsweise leicht beschleunigten, Überschall-Ausziehgasströmung, und

c) Reduktion der Geschwindigkeit der Ausziehgasströmung zuerst durch an definierter Stelle herbeigeführten Verdichtungsstoßes und danach im Unterschalldiffusor.

Die klare Trennung der einzelnen Zerfaserungsstufen und ihre Optimierung erlaubt die Herstellung von Mineralwollefasern sehr gleichmäßiger Dicke und Länge. Das Verfahren nach DE-OS-3 016 114 wird erfindungsgemäß dadurch weiter verbessert, daß die Überschall-Ausziehgasströmung durch parallele Begrenzungsgasströme eingeschlossen wird.

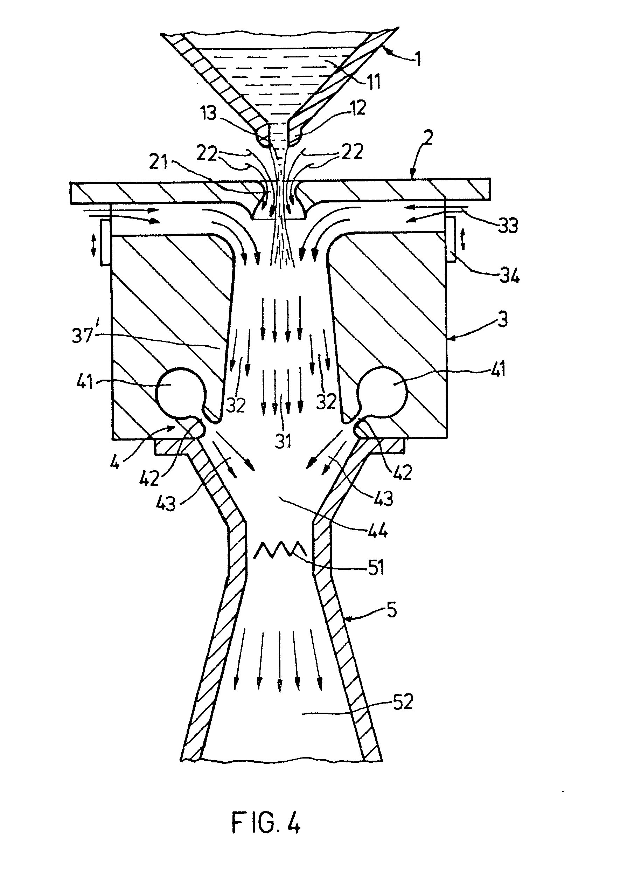

Eine Ausführungsform dieses für die Herstellung von Mineralwollefasern bevorzugten Verfahrens ist in Fig. 4 wiedergegeben. Die Fig. 4 zeigt einen senkrecht zur Zeichnungsebene ausgedehnten Verteilertiegel 1, der die Schmelze 11 enthält. An der Unterseite des Verteilertiegels befinden sich Nippel 12, aus denen eine Vielzahl in Reihe angeordneter Schmelzeströme 13 ausfließen. Unterhalb des Verteilertiegels 1 befindet sich eine Eintrittsdüsenplatte 2, die eine Vielzahl von in Reihe unter den Düsennippeln 12 angeordnete, als Lavaldüsen ausgebildete, Eintrittsöffnungen 21 enthält.

Zur Erzielung einer möglichst hohen Aufspaltung der einzelnen Schmelzeströme 13 in Sekundärschmelzefäden wird die Kontur des Einlaufs der Eintrittsdüse 21 bevorzugt entsprechend der Lehre der deutschen Offenlegungsschrift 3 016 114 so gestaltet, daß ein maximales Druckgefälle in der Einlaufströmung 22 erzeugt wird. Danach soll der Einlauf der Eintrittsöffnung konvergierend gestaltet sein, wobei die Kontur im konvergierenden Teil der Eintrittsöffnung innerhalb zweier konzentrischer Radien von $R_1 = 28$ und $R_2 = 50$ %, vorzugsweise $R_2 = 32$ %, des engsten Durchmessers der Eintrittsdüse verläuft. Bevorzugt im Rahmen der vorliegenden Erfindung sind rotationssymmetrische Einzelöffnungen für je einen Schmelzestrom 13.

Das Blasmedium (vorzugsweise Umgebungsluft) soll an der Stelle des engsten Durchmessers der Eintrittsöffnung Schallgeschwindigkeit erreichen. Zur weiteren Erhöhung der Geschwindigkeit des Blasmediums in der Eintrittsdüse 21 schließt sich an den konvergierenden Einlaufteil ein divergierender Lavalteil an. Die Kontur des divergierenden Teils ist nach bekannten Strömungsgesetzen so gestaltet, daß die Geschwindigkeit des Blasmediums am Austrittsende der Düse 21 etwa 360 bis 500 m/s beträgt.

Der an die Eintrittsdüse 21 sich anschließende Ausziehabschnitt 3 soll vorzugsweise eine Länge in Strömungsrichtung von 40 bis 100 mm aufweisen. Durch die Länge des Ausziehabschnittes lassen sich Länge und Durchmesser der gewünschten Mineralfasern beeinflussen. Besonders lange und dünne Mineralfasern werden mit einem möglichst langen Ausziehabschnitt erhalten. Der Ausziehabschnitt ist durch seitliche Begrenzungsflächen 37' definiert, die einen senkrecht zur Zeichnungsebene ausgedehnten, für die in Reihe angeordneten Eintrittsdüsen 21 gemeinsamen Kanal 4 bilden. Die Begrenzungsflächen 37' sollen vorzugsweise in Strömungsrichtung leicht divergent verlaufen. Der Winkel zwischen den Begrenzungsflächen 37' beträgt vorzugsweise zwischen 1 und 10°, besonders bevorzugt etwa 4°. Durch die Divergenz des Ausziehkanals wird eine weitere leichte Beschleunigung der Ausziehgasströmung 31 und der parallelen Begrenzungsgasströme 22 bewirkt.

Durch die unterhalb der Eintrittsdüsenplatte angeordneten Kanäle 33 strömt seitlich Gas ein, das nach Umlenkung die parallelen Begrenzungsgasströme bildet.

Das die parallelen Begrenzungsgasströme 32 bildende Gas kann ebenfalls Umgebungsluft sein. Wesentlich ist, daß die parallelen Begrenzungsgasströme etwa gleiche oder nur wenig geringere Geschwindigkeit als die Ausziehgasströme besitzen, damit die Reibung zwischen parallelen Begrenzungsgasströmen 32 und Ausziehgasströmung 31 und die Vermischung der beiden Gasströmungen möglichst gering ist. Vorteilhaft haben beide Gasströmungen auch annähernd gleiche Temperatur.

Bei besonders empfindlichen zu zerfasernden Systemen, z. B. Metallschmelzen oder hochschmelzenden Oxiden mit schmalen Viskositätsbereich, kann es zweckmäßig sein, für die Ausbildung der parallelen Begrenzungsgasströme Gase geringerer Dichte und Viskosität vorzusehen.

Das zum Antrieb der Ausziehgasströmung 31 und der parallelen Begrenzungsgasströme 32 notwendige Druckgefälle wird durch Treibstrahlen 43 erzeugt. Die Erzeugung der Treibstrahlen 43 erfolgt aus Druckgasleitungen 41 und vorzugsweise mit Lavaldüsen 42.

Die Vermischung der Treibstrahlen 43 mit den Ausziehgasströmen 31 und parallelen Begrenzungsgasströmen 32 erfolgt vorzugsweise bei konstantem Druck in einer Mischzone 44.

Der Druck in den Druckgasleitungen beträgt vorzugsweise 6 bis 10 bar. Die Geschwindigkeit der Treibgasstrahlen 43 beträgt vorzugsweise 450 bis 600 m/s. Als Druckgas kann Druckluft, Wasserdampf oder Verbrennungsgase eingesetzt werden. Bevorzugt wird Druckluft eingesetzt.

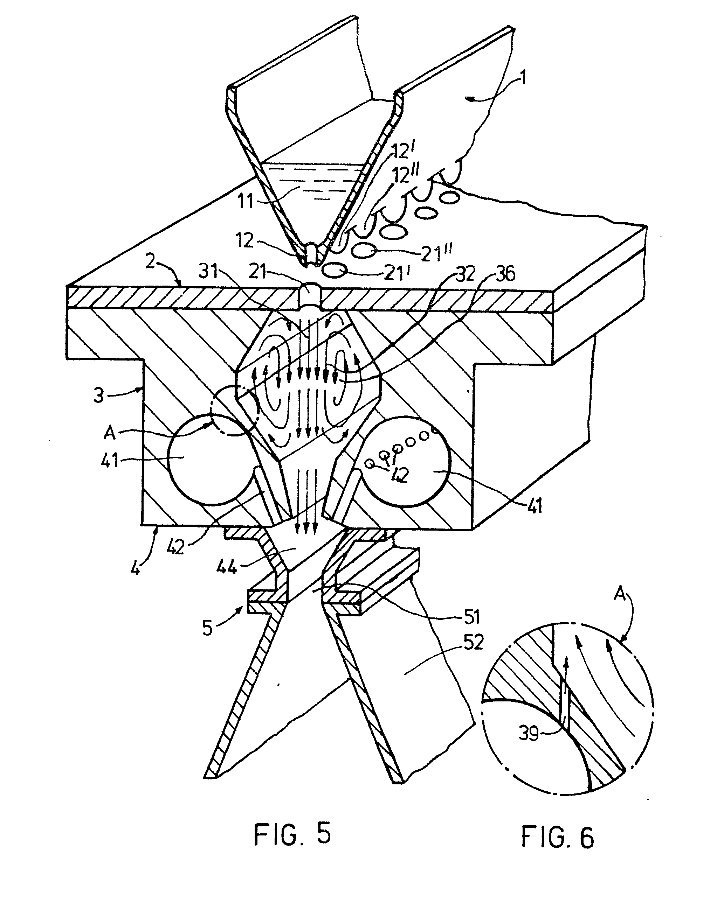

Die in der Ausziehgasströmung 31 dispergierten Fasern sollen bei Erreichen der Mischzone 44 auf den gewünschten Durchmesser ausgezogen und erstarrt sein. Unterhalb der Mischzone 44 schließt sich ein Bereich 5 der Ziehdüse mit konstantem Querschnitt 51 und daran ein Unterschalldiffusor 52 an. In dem Bereich mit konstantem Querschnitt erfolgt die Reduktion der Überschallgasgeschwindigkeit durch Druckumsetzung mit Verdichtungsstoß auf Unterschallgeschwindigkeit. Die Gasgeschwindigkeit wird dann im Unterschalldiffusor 52 weiter reduziert. Fig. 5 zeigt eine Abwandlung der Vorrichtung nach Fig. 4, wobei die parallelen Begrenzungsgasströme ähnlich wie in Fig. 3 durch den zur Ausziehgasströmung 31 parallelen Teil einer Walzenströmung 36 gebildet werden. In der vereinfachten perspektivischen Darstellung sind die Eintrittsöffnungen 21, 21' und 21'' als zylindrische Durchgangsbohrungen dargestellt. Die Eintrittsdüsen werden bevorzugt als Lavaldüsen ausgeführt, wenn eine möglichst hohe Aufspaltung des Primärschmelzefadens in möglichst viele Sekundärschmelzefäden in der Einlaufströmung erwünscht ist. Ebenso sind die Treibstrahldüsen 42 als zylindrische Durchgangsbohrungen ausgeführt. Wenn möglichst hohe Gasgeschwindigkeiten erwünscht sind, werden auch die Treibstrahldüsen 42 vorzugsweise als Lavaldüsen ausgebildet.

In einer bevorzugten Ausführungsform können ferner Hilfstreibstrahldüsen 39 zum Antrieb der Walzenströmung 36 vorgesehen sein. Dies ist in Fig. 6 als Auschnitt-Detaildarstellung A dargestellt.

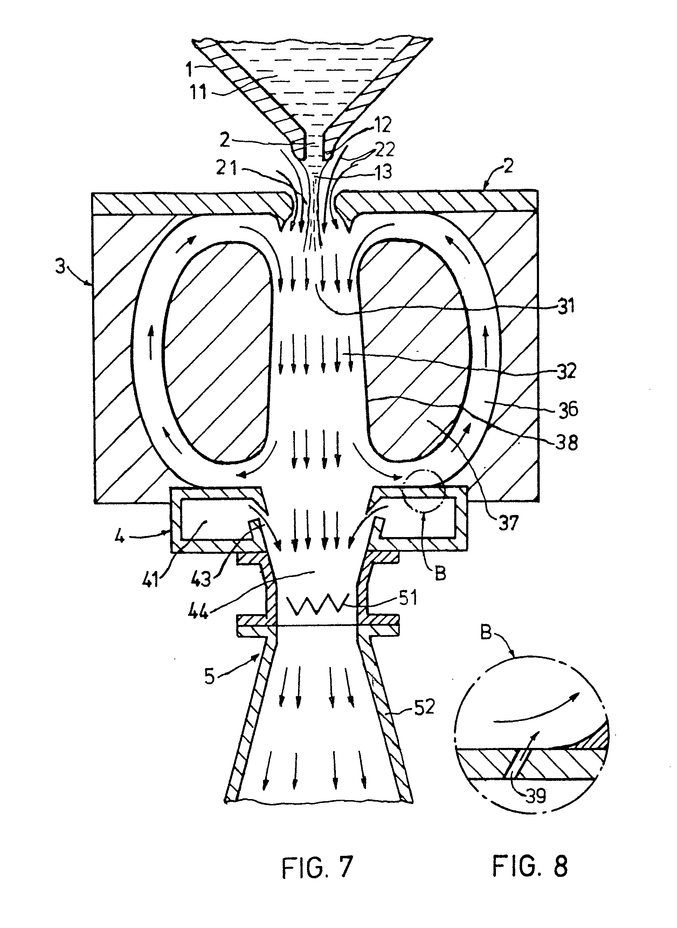

Die Ausführungsform der erfindungsgemäßen Ziehdüse nach Fig. 7 enthält Zentralkörper 37 zur Stabilisierung der Walzenströmung 36. Die der Mittelebene der Ziehdüse zugewandte Fläche 38 der Zentralkörper 37 ist vorzugsweise eben ausgeführt und verläuft leicht divergent, wie bereits bei der Beschreibung der Fig. 4 dargestellt wurde. Auch hier können gemäß Detaildarstellung B der Fig. 8 Hilfstreibstrahldüsen 39 zum Antrieb der Walzenströmung 36 vorgesehen sein.

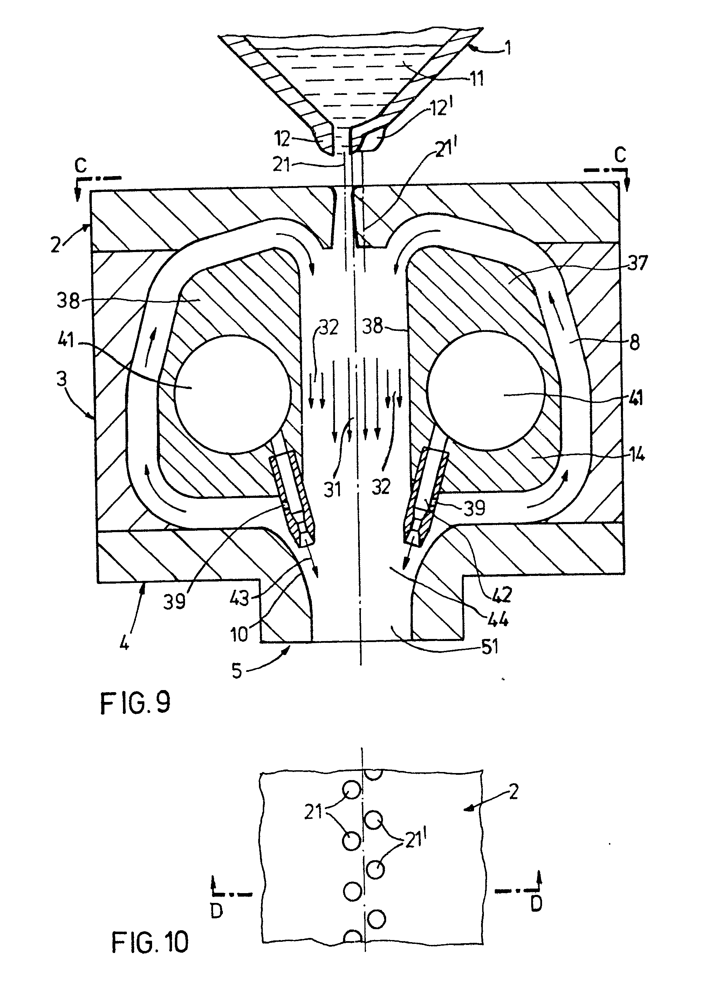

Fig. 9 zeigt eine besonders bevorzugte Ausführungsform der vorliegenden Erfindung. Hier wird das Druckgas für die Treibstrahlen 43 durch Druckgasleitungen 41 zugeführt, die innerhalb der Zentralkörper 37 angeordnet sind. Bei dieser Anordnung wird ein Wärmeübergang der durch das Abkühlen der Schmelzefäden aufgeheizten parallelen Gasströme auf das Treibstrahlgas ermöglicht, so daß ein Teil der in der Mineralschmelze enthaltenen Wärmeenergie zurückgewonnen wird.

Ferner zeigt die Abbildung eine bevorzugte Anordnung der Schmelzeausflußöffnungen 12 und 12' als gegeneinander versetzte Doppelreihe. Entsprechend sind auch die Eintrittsöffnungen 21 und 21' in Doppelreihe angeordnet. Fig. 10 zeigt eine Aufsicht auf die Eintrittsdüsenplatte 2, aus der die Anordnung der Eintrittsöffnungen 21 und 21' erkennbar ist.

Der mittlere Abstand der die parallelen Begrenzungsgasströme 32 begrenzenden Flächen 38 beträgt im oberen Teil der Ziehdüse vorzugsweise etwa das 1,5- bis 2,5-fache des Austrittsdurchmessers der als Lavalldüse ausgebildeten Eintrittsöffnung 21.

Das erfindungsgemäße Verfahren wird anhand des nachfolgenden Beispiels noch näher erläutert :

Beispiel

Es wird eine Ziehdüse entsprechend Fig. 5 eingesetzt. Anstelle der zylindrischen Eintrittsbohrungen 21 sind jedoch Lavaldüsen vorgesehen. Die Lavaldüsen weisen einen engsten Querschnitt von 4 mm auf. Die Kontur des konvergierenden Eintrittsteils der Lavaldüse hat einen Krümmungsradius von 1,2 mm. Der sich vom engsten Querschnitt an anschließende Lavalteil der Düse erweitert sich auf einen Durchmesser von 4,6 mm. Die Eintrittsdüsenplatte 2 ist 12 mm dick, entsprechend der Länge der Lavaldüse.

Der sich an die Eintrittsdüse 21 anschließende Ausziehteil 3 erweitert sich auf einen offenen Querschnitt von 30 mm. Der breiteste offene Querschnitt ist 20 mm unterhalb der Eintrittsdüsenplatte erreicht. Die Gesamtlänge der Ziehdüse bis zur Eintrittsebene der Treibstrahldüsen 42 beträgt 65 mm. Der offene Querschnitt der Ziehdüse weist an dieser Stelle eine Breite von 9 mm auf. Beidseitig des offenen Ziehdüsenquerschnitts münden je 88 Treibstrahlbohrungen 42 von 1,7 mm Durchmesser. Die Breite des Strömungskanals beträgt an der Stelle 51, an der der Verdichtungsstoß herbeigeführt wird, 8 mm. Daran schließt ein Unterschalldiffusor 52 mit einem Öffnungswinkel von 7° an.

Der Schmelzetiegel 1 hat an seiner Unterseite 88 Austrittsöffnungen 12 von je 1,5 mm Durchmesser und mit einem gegenseitigen Abstand von 5 mm. Entsprechend weist die Ziehdüse 88 Eintrittsdüsen 21 auf.

Der Tiegel enthält eine Mineralschmelze aus 90 Gew.- % Diabas (Basalt) und 10 % Kalkstein bei einer Temperatur von 1 350 °C. Aus jedem Düsennippel treten 30 g/min Mineralschmelze aus.

Den Druckluftleitungen 41 wird Druckluft von 7,5 bar bei Raumtemperatur zugeführt. Durch jede Treibstrahldüse 42 werden 3,6 g/s Treibluft in die Mischzone 44 geblasen. Aufgrund des dadurch erzeugten Druckgefälles innerhalb der Ziehdüse bildet sich die Einlaufströmung oberhalb der Eintrittsdüsen 21 aus. In jede Eintrittsdüse 21 werden 3 g/s Umgebungsluft eingesaugt. Im engsten Querschnitt der Eintrittsdüse 21 herrscht die kritische oder Lavalgeschwindigkeit von 314 bis 325 m/s, je nach Erwärmung der eintretenden Umgebungsluft. Der Druck am Ende der Eintrittsdüse beträgt 0,3 bar. Hinter dem Verdichtungsstoß an der Stelle 51 beträgt der Druck 0,7 bar. Er steigt bis zum Ende des Unterschalldiffusors auf 1 bar an.

Es werden Fasern von 5,8 μm Durchmesser und einer mittleren Länge von 40 mm erreicht. Das erhaltene Faservlies weist eine Wärmeleitfähigkeit von $\lambda = 0,037\,5$ W/mK bei einem Raumgewicht von 30 kg/m$^3$ auf. Der Gehalt an Perlen mit einem Durchmesser oberhalb von 0,2 mm beträgt 2 %.

## Patentansprüche

1. Verfahren zur Herstellung von Fasern nach dem Düsenblasverfahren, bei dem Primärfäden (13) beim Hindurchtritt durch eine Ziehdüse (2, 3) durch im wesentlichen zu den Primärfäden (13) parallele Ausziehgasströme (31) zerfasert und ausgezogen werden und die Ausziehgasströme (31) innerhalb der Ziehdüse (2, 3) zumindest über einen Teil ihrer Länge in Strömungsrichtung von parallelen Begrenzungsgasströmen (32) umgeben werden, dadurch gekennzeichnet, daß die Geschwindigkeit der parallelen Begrenzungsgasströme 50 % bis 99 %, vorzugsweise 60 % bis 80 %, der Geschwindigkeit der Ausziehgasströme (31) und der Volumenstrom der parallelen Begrenzungsgasströme (32) 10 % bis 80 %, vorzugsweise 20 % bis 60 %, des Volumenstroms der Einlaufgasströmung (22) an der Düseneintrittsöffnung (21) betragen.

2. Verfahren nach Anspruch 1, dadurch gekennzeichnet, daß die Ausziehgasströme (31) und die parallelen Begrenzungsgasströme (32) durch ein durch Treibstrahlen (43) innerhalb der Ziehdüse (2, 3) erzeugtes Druckgefälle angetrieben werden.

3. Verfahren nach einem der Ansprüche 1 oder 2, dadurch gekennzeichnet, daß die parallelen Begrenzungsgasströme (32) durch den mit der Ausziehgasströmung (31) in Berührung stehenden Teil einer beidseitig der Ausziehgasströmung (31) erzeugten Walzenströmung (36) erzeugt werden.

4. Verfahren nach Anspruch 3, dadurch gekennzeichnet, daß die Walzenströmung durch Hilfstreibstrahlen (39) angetrieben wird.

5. Verfahren nach einem der Ansprüche 1 bis 4, dadurch gekennzeichnet, daß die Strömungsgeschwindigkeit der Ausziehgasströme zwischen 360 m/s und 500 m/s eingestellt wird.

6. Ziehdüse zur Herstellung von Fasern nach dem Düsenblasverfahren, bestehend aus einem Eintrittsteil (2) und einem daran anschließenden Ausziehkanal (3), wobei zusätzlich Mittel zur Erzeugung von an der Innenwand des Ausziehkanals (3) entlang strömenden parallelen Begrenzungsgasströmen (32) vorgesehen sind, dadurch gekennzeichnet, daß die Mittel zur Erzeugung der parallelen Begrenzungsgasströme (32) als beidseitig des Ausziehkanals (3) angeordnete, zum Ausziehkanal (3) hin offene Kammern (35) ausgebildet sind, in denen sich unter der Wirkung der Ausziehgasströmung (31) stationäre Walzenströmungen (36) ausbilden.

7. Ziehdüse nach Anspruch 6, dadurch gekennzeichnet, daß die Kammern (35) zur Ausbildung der parallelen Begrenzungsgasströme Zentralkörper (37) zur Stabilisierung der Walzenströmung (36) enthalten.

## Claims

1. Process for producing fibres by the blast-drawing process in which primary filaments (13) are fiberised and drawn on passing through a drawing nozzle (2, 3) by means of drawing gas streams (31) which are essentially parallel to the primary filaments (13) and the drawing gas streams (31) are surrounded at least over a part of their length, inside the drawing nozzle (2, 3) and in the direction of flow, by parallel boundary gas streams (32), characterised in that the velocity of the parallel boundary gas streams is 50 % to 99 %, preferably 60 % to 80 %, of the velocity of the drawing gas streams (31) and the volumetric rate of flow of the parallel boundary gas streams (32) is 10 % to 80 %, preferably 20 % to 60 %, of the volumetric rate of flow of the inlet gas stream (22) at the nozzle inlet opening (21).

2. Process according to Claim 1, characterised in that the drawing gas streams (31) and the parallel boundary gas streams (32) are driven by a pressure drop produced by propulsive jets (43) inside the drawing nozzle (2, 3).

3. Process according to one of Claims 1 or 2, characterised in that the parallel boundary gas streams (32) are formed by that part of a circular stream (36) produced on both sides of the drawing gas stream (31) which is in contact with the drawing gas stream (31).

4. Process according to Claim 3, characterised in that the circular stream is driven by auxiliary propulsive jets (39).

5. Process according to one of Claims 1 to 4, characterised in that the flow rate of the drawing gas streams is adjusted to between 360 m/s and 500 m/s.

6. Drawing nozzle for the production of fibres by the blast-drawing process, consisting of an inlet section (2) followed by a drawing channel (3), additional means being provided for producing parallel boundary gas streams (32) flowing along the inner wall of the drawing channel (3), characterised in that the means for producing the parallel boundary gas streams (32) are in the form of chambers (35) which are arranged on both sides of and are open towards the drawing channel (3), and in which stationary circular streams (36) form under the effect of the drawing gas stream (31).

7. Drawing nozzle according to Claim 6, characterised in that the chambers (35) for forming the parallel boundary gas streams contain central elements (37) for stabilising the circular flow (36).

**Revendications**

1. Procédé de fabrication de fibres selon le procédé de soufflage à tuyère, dans lequel, en passant par une tuyère d'étirage (2, 3), des fils primaires (13) sont réduits en fibres et étirés par des courants gazeux d'étirage (31) essentiellement parallèles aux fils primaires (13), tandis que les courants gazeux d'étirage (31) sont entourés, à l'intérieur de la tuyère d'étirage (2, 3) et au moins sur une partie de leur longueur dans le sens d'écoulement, par des courants gazeux parallèles de délimitation (32), caractérisé en ce que la vitesse des courants gazeux parallèles de délimitation atteint 50 à 99 %, de préférence, 60 à 80 % de la vitesse des courants gazeux d'étirage (31), tandis que le courant volumétrique des courants gazeux parallèles de délimitation (32) atteint 10 à 80 %, de préférence, 20 à 60 % du courant volumétrique des courants gazeux d'entrée (22) à l'ouverture d'entrée (21) de la tuyère.

2. Procédé selon la revendication 1, caractérisé en ce que les courants gazeux d'étirage (31) et les courants gazeux parallèles de délimitation (32) sont entraînés par une chute de pression produite par des jets de propulsion (43) à l'intérieur de la tuyère d'étirage (2, 3).

3. Procédé selon une des revendications 1 ou 2, caractérisé en ce que les courants gazeux parallèles de délimitation (32) sont produits par la partie (entrant en contact avec les courants gazeux d'étirage (31)) de courants circulaires (36) produits de part et d'autre des courants gazeux d'étirage (31).

4. Procédé selon la revendication 3, caractérisé en ce que les courants circulaires sont entraînés par des jets de propulsion auxiliaires (39).

5. Procédé selon une des revendications 1 à 4, caractérisé en ce que la vitesse d'écoulement des courants gazeux d'étirage est réglée entre 360 m/s et 500 m/s.

6. Tuyère d'étirage pour la fabrication de fibres selon le procédé de soufflage à tuyère, cette tuyère comprenant une partie d'entrée (2) suivie d'un canal d'étirage (3), des moyens étant, en outre, prévus pour produire des courants gazeux parallèles de délimitation (32) s'écoulant le long de la paroi intérieure du canal d'étirage (3), caractérisée en ce que les moyens destinés à produire les courants gazeux parallèles de délimitation (32) sont réalisés sous forme de chambres (35) ouvertes en direction du canal d'étirage (3), disposées de part et d'autre de ce canal d'étirage (3) et dans lesquelles des courants circulaires stationnaires (36) se forment sous l'action des courants gazeux d'étirage (31).

7. Tuyère d'étirage selon la revendication 6, caractérisée en ce que, en vue de former les courants gazeux parallèles de délimitation, les chambres (35) comportent des corps centraux (37) en vue de stabiliser les courants circulaires (36).

FIG.1

FIG. 2

FIG. 3

FIG. 4

FIG. 5

FIG. 6

FIG. 7          FIG. 8

FIG. 9

FIG. 10